# FASCICULE DE BREVET EUROPEEN

(11) **EP 4 589 841 B1**
(45) Date de publication et mention de la délivrance du brevet: **07.10.2026**
(21) Numéro de dépôt: 25151844.5
(22) Date de dépôt: 14.01.2025
(51) Int. Cl.: H02S 20/10, F24S 25/617, F24S 25/12

(54) **STRUCTURE DE SUPPORT D'AU MOINS UN PANNEAU SOLAIRE**
TRÄGERSTRUKTUR FÜR MINDESTENS EINE SOLARZELLE
STRUCTURE FOR SUPPORTING AT LEAST ONE SOLAR PANEL

(30) Priorité: 18.01.2024 FR 2400502
(43) Date de publication de la demande: 23.07.2025
(73) Titulaire: Adiwatt, 41330 Fossé (FR)
(72) Inventeur: AZIBERT, Paul, 75010 PARIS (FR)
(74) Mandataire: Cabinet Beau de Loménie

(56) Documents cités:
- DE-U1- 202020 105 707
- DE-U1- 202020 107 135
- FR-A1- 3 122 540
- US-A1- 2015 292 228

## Description

### Domaine technique

Le présent exposé concerne le domaine des structures portantes, et plus particulièrement une structure de support d'au moins un panneau solaire, par exemple un panneau photovoltaïque ou thermique. Une telle structure de support peut trouver son application pour soutenir un ou plusieurs panneaux solaires, notamment dans un sol meuble tel qu'un terrain naturel ou un champ.

### Technique antérieure

Les structures de support de panneaux solaires peuvent comprendre un ou plusieurs poteaux pour leur fixation au sol. Pour ancrer la structure par rapport au sol, l'extrémité inférieure des poteaux est noyée dans une embase en béton posée au sol ou enterrée. La mise en œuvre d'une telle fixation est toutefois lourde, longue et coûteuse.

Des systèmes plus légers ont pu être envisagés. Par exemple, le modèle d'utilité DE 20 2020 107 135 U1 ou le document FR 3 122 540 A1 prévoit que chaque poteau soit emmanché sur un pied qui est lui-même posé au sol et fixé au sol grâce à des pieux. Un tel système est plus simple à mettre en œuvre mais peut se révéler insuffisant en termes de fixation des poteaux. En outre, le positionnement plus ou moins précis du pied conditionne la précision de montage du poteau et, par suite, la tenue mécanique de la structure de support.

L'invention vise au moins à remédier en partie à ces inconvénients.

### Exposé de l'invention

A cet effet, le présent exposé concerne une structure de support d'au moins un panneau solaire, comprenant au moins un poteau de support muni de moyens d'ancrage dans le sol, les moyens d'ancrage comprenant une attache associée à des pieux d'ancrage à enfoncer dans le sol, dans laquelle le poteau de support s'étend au-delà de l'attache, à l'opposé de l'au moins un panneau solaire, pour son enfoncement dans le sol.

Par souci de concision, dans le présent exposé, et sauf indication contraire, par « un » ou « le » poteau de support (ou plus simplement poteau), on entend « au moins un » ou « l'au moins un » ou encore « chaque » poteau. En d'autres termes, les propriétés décrites au sujet d'un poteau peuvent s'appliquer à tout autre poteau de la structure de support, le cas échéant. Il en va de même des pieux d'ancrage, ou plus simplement pieux.

Le poteau de support peut être monobloc ou composé de plusieurs parties assemblées les unes aux autres, le poteau s'étendant globalement entre une extrémité dite supérieure, du côté du panneau solaire, et une extrémité dite inférieure, à l'opposé. Du côté de l'extrémité supérieure, le poteau peut soutenir le ou les panneaux solaires au moyen de tout support intermédiaire et/ou toute fixation adéquate.

L'extrémité inférieure du poteau est destinée à être enfoncée dans le sol. Ainsi, à l'état monté, le poteau s'étend partiellement sous la surface du sol et partiellement au-dessus du sol.

La structure de support comprend par ailleurs, pour chaque poteau, une attache. Des pieux d'ancrage, typiquement au moins deux pieux voire au moins trois pieux, s'enfoncent dans le sol afin de fixer l'attache au sol. L'attache est elle-même prévue pour être solidaire du poteau, qu'elle soit monobloc avec le poteau ou bien sous forme d'une pièce rapportée et fixée au poteau.

L'attache peut être prévue pour se situer sur le sol ou au-dessus, par exemple au niveau du sol. Ainsi, l'attache se situe à une position intermédiaire par rapport au poteau, entre l'extrémité inférieure et l'extrémité supérieure. En d'autres termes, le poteau de support s'étend au-delà de l'attache, non seulement en direction du panneau solaire (pour soutenir ledit panneau en hauteur) mais aussi dans la direction opposée, pour son enfoncement dans le sol.

Le sol est de préférence un sol suffisamment meuble pour permettre l'enfoncement du poteau et des pieux, par exemple un sol en terre, en sable ou équivalent, par opposition à des sols bétonnés ou goudronnés.

La structure de support proposée est donc ancrée au sol non seulement par les moyens d'ancrage mais aussi par le poteau lui-même. Il s'ensuit une fixation plus robuste et donc, toutes choses égales par ailleurs, une meilleure tenue de la structure de support aux sollicitations mécaniques, notamment l'effet du vent sur les panneaux solaires. Inversement, cette meilleure fixation de la structure de support permet, à tenue égale, d'alléger les moyens d'ancrage, ce qui est avantageux en termes de mise en œuvre et de coûts.

Par ailleurs, le fait que le poteau soit enfoncé dans le sol facilite le montage du poteau à la position désirée, ce qui améliore *in fine* la tenue mécanique de la structure de support.

Dans certains modes de réalisation, l'attache comprend une ferrure rapportée sur le poteau de support. La ferrure peut être obtenue à partir d'une feuille métallique, par exemple par découpage, pliage, roulage et/ou emboutissage. En particulier, la position de l'attache sur le poteau peut être ajustée directement sur le lieu du montage. Cela permet de standardiser le poteau et l'attache.

Dans certains modes de réalisation, l'attache comprend deux demi-ferrures. Les deux demi-ferrures peuvent être montées en vis-à-vis, de part et d'autre du poteau. Cela permet d'entourer le poteau sans avoir à faire coulisser de pièce à partir d'une extrémité du poteau. Le montage est donc simplifié.

La ferrure ou les deux demi-ferrures peuvent être prévues à l'extérieur du poteau, ce qui facilite également leur installation.

Dans certains modes de réalisation, les deux demi-ferrures sont assemblées l'une à l'autre par un ou plusieurs des pieux d'ancrage. Cela permet de solidariser entre elles les demi-ferrures sans ajouter de pièce supplémentaire, et garantit un bon alignement des demi-ferrures et donc une meilleure stabilité de la structure de support.

Dans certains modes de réalisation, le poteau de support s'étend au-delà de l'attache, à l'opposé de l'au moins un panneau solaire, sur au moins 50 centimètres (cm), de préférence au moins 1 mètre (m). Cette longueur peut correspondre à la profondeur d'enfoncement dans le sol. Grâce à ces dispositions, le poteau est solidement ancré dans le sol.

Dans certains modes de réalisation, le poteau de support est creux. Cela facilite son enfoncement dans le sol dans la mesure où la quantité de matière à chasser lors en l'enfoncement est limitée, a fortiori si l'extrémité inférieure du poteau est ouverte sur l'intérieur creux du poteau. Le poteau de support peut avoir une section transversale dont le contour est ouvert ou fermé.

Dans certains modes de réalisation, le poteau de support est formé par un profilé. Au sens du présent exposé, un profilé est un élément de section transversale constante, à l'exception éventuelle des extrémités. Dans ces modes de réalisation, au moins 50% de la longueur du poteau, voire 75%, présente une section transversale constante, par exemple dans la partie intermédiaire du poteau. Le fait de former le poteau par un profilé facilite non seulement la fabrication du poteau mais aussi son enfoncement dans le sol.

Dans certains modes de réalisation, les pieux d'ancrage sont inclinés par rapport au poteau de support, l'angle entre un pieu d'ancrage et le poteau de support mesurant de préférence au moins 15°, de préférence au moins 20°, de préférence encore au moins 30°. L'angle peut être le même entre le poteau et tous les pieux d'ancrage, ou différer d'un pieu d'ancrage à l'autre. L'angle est ici un angle géométrique, c'est-à-dire exprimé entre 0° et 90°.

Grâce au fait que les pieux d'ancrage sont inclinés par rapport au poteau de support, les pieux apportent une résistance à l'arrachement (effort de traction normal au sol), tandis que les efforts latéraux sur la structure de support sont supportés par le poteau enfoncé dans le sol. Le fait d'enfoncer le poteau dans le sol permet donc de séparer la résistance aux efforts latéraux de la résistance à l'arrachement, et de dimensionner précisément le poteau et les pieux d'ancrage pour obtenir la résistance souhaitée. Il s'ensuit une meilleure tenue et une plus grande flexibilité de conception.

Un angle supérieur à 15° permet déjà de découpler efficacement le rôle des pieux du rôle du poteau. Un angle encore supérieur, par exemple compris entre 20° et 27° voire même supérieur à 30°, par exemple entre 32° et 38°, accentue encore ces avantages. L'angle entre le pieu et le poteau est de préférence inférieur à 70°, voire à 60°, pour garantir au pieu un enfoncement suffisant.

Dans certains modes de réalisation, les moyens d'ancrage comprennent des moyens de verrouillage des pieux d'ancrage par rapport à l'attache. Ainsi, après leur enfoncement dans le sol, les pieux peuvent être rendus solidaires de l'attache. Les moyens de verrouillage empêchent le retrait des pieux du sol et améliorent donc encore la tenue de la structure de support.

Dans certains modes de réalisation, l'extrémité du poteau de support opposée au panneau solaire est effilée. Cela facilite l'enfoncement du poteau dans le sol.

Le présent exposé concerne également un procédé de montage d'une structure de support d'au moins un panneau solaire, le procédé comprenant l'enfoncement dans le sol d'au moins un poteau de support de la structure de support, la fourniture de moyens d'ancrage dudit poteau de support, les moyens d'ancrage comprenant une attache associée à des pieux d'ancrage, et l'enfoncement dans le sol desdits pieux d'ancrage. Le procédé peut être mis en œuvre avec une structure de support telle que précédemment décrite, et tout ou partie des caractéristiques précédemment décrites peuvent s'y appliquer.

L'enfoncement dans le sol du poteau de support peut être réalisé avant, pendant ou après l'enfoncement dans le sol des pieux d'ancrage. Toutefois, le fait d'enfoncer le poteau dans le sol, au moins partiellement, avant les pieux, permet de contrôler plus facilement la précision de positionnement du poteau dans le sol.

Dans certains modes de réalisation, le procédé de montage comprend le perçage de l'attache et/ou du poteau de support pour accueillir des moyens de fixation de l'attache au poteau de support. Le perçage peut être réalisé directement sur le site de montage, de préférence après enfoncement du poteau de support dans le sol, afin d'être réalisé exactement au bon endroit, en tenant compte d'éventuelles difficultés d'enfoncement rencontrées sur un terrain particulier. Le montage est donc facilité et le poteau aussi bien que son attache peuvent être fabriqués de manière standard, indépendamment des contraintes locales éventuelles.

### Brève description des dessins

D'autres caractéristiques et avantages de l'objet du présent exposé ressortiront de la description suivante de modes de réalisation, donnés à titre d'exemples non limitatifs, en référence aux figures annexées.
La figure 1 est une vue en perspective d'une structure de support selon un mode de réalisation.
La figure 2 une vue en perspective de moyens d'ancrage d'un poteau de support selon un mode de réalisation.
La figure 3 est une vue en coupe selon le plan III-III de la figure 1.

### Description détaillée

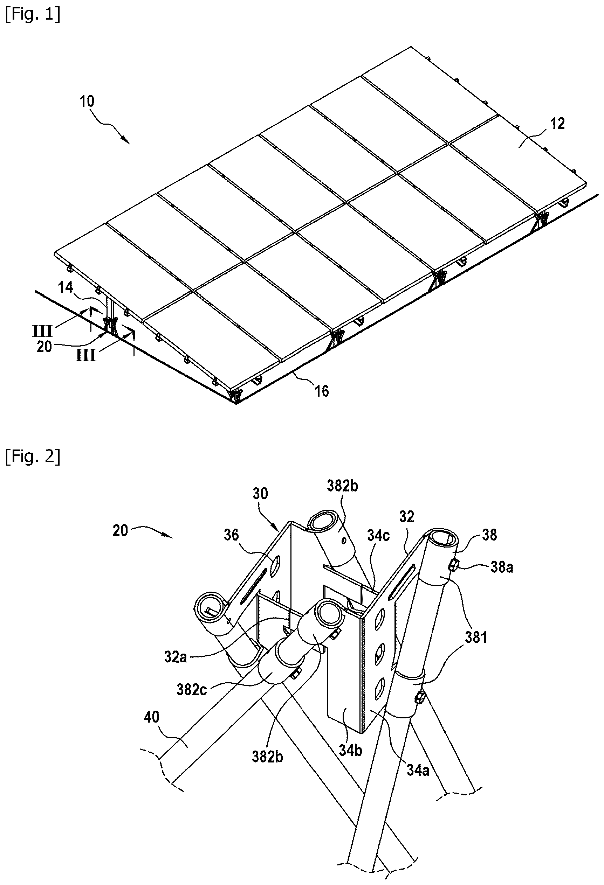

La figure 1 illustre en perspective une structure de support 10 d'au moins un panneau solaire 12 selon un mode de réalisation. La structure de support 10 comprend au moins un poteau de support 14 (ou poteau 14), en l'espèce une pluralité de tels poteaux 14, disposés par exemple selon une ou plusieurs rangées. A leur extrémité supérieure, les poteaux 14 soutiennent un ou plusieurs panneaux solaires 12, typiquement des panneaux photovoltaïques ou thermiques, par tout moyen approprié que l'homme du métier saurait sélectionner selon ses besoins. Selon un exemple, les poteaux 14 soutiennent des traverses auxquelles peuvent être fixés des rails de montage pour les panneaux solaires. Comme illustré sur la figure 1, les traverses ou les rails de montage peuvent être inclinés par rapport au sol 16.

Les poteaux 14 peuvent être identiques ou différents les uns des autres. Par exemple, les poteaux 14 peuvent être creux ou pleins. Alternativement ou en complément, chaque poteau 14 peut être formé par un profilé, et présenter une section transversale sensiblement constante. Par exemple, comme illustré, les poteaux 14 peuvent être sensiblement rectilignes. Dans le présent mode de réalisation, les poteaux 14 peuvent avoir une section transversale ouverte, par exemple en forme générale de C, de U, de I ou de M, mais toute autre section transversale ouverte est envisageable. Par ailleurs, la section transversale peut également être fermée, par exemple en forme de polygone (rectangle ou autre), de cercle ou d'ovale.

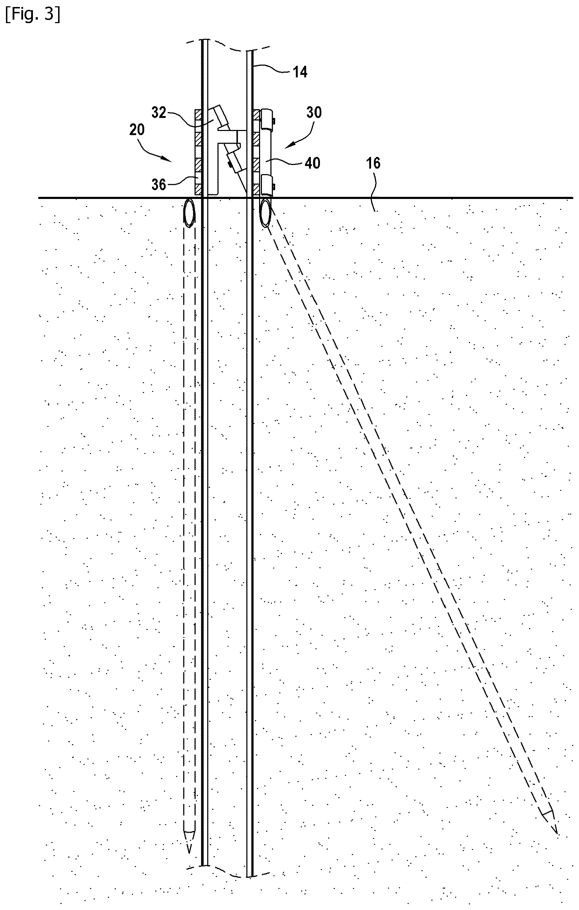

Au moins certains des poteaux de support 14 sont munis de moyens d'ancrage 20 dans le sol, dont un mode de réalisation est décrit ci-après en référence aux figures 2 et 3.

Dans le présent mode de réalisation, les moyens d'ancrage 20 comprennent une attache 30 associée à des pieux d'ancrage 40. Pour une meilleure lisibilité, le poteau de support 14 n'est pas représenté sur la figure 2, mais on comprend de la figure 3 que l'attache 30 est configurée pour s'emmancher sur le poteau de support 14, à l'extérieur du poteau de support 14.

L'attache 30 est ici une pièce rapportée sur le poteau de support 14. L'attache 30 peut comprendre une ferrure en une ou plusieurs parties, en l'occurrence deux demi-ferrures 32. Les demi-ferrures 32 peuvent être en contact ou non l'une avec l'autre. En l'espèce, elles sont en contact au niveau de bords complémentaires 32a, ce qui facilite leur bon positionnement l'une par rapport à l'autre. Plus généralement, les deux demi-ferrures 32 peuvent définir ensemble un contour fermé qui entoure le poteau 14, en épousant éventuellement sa forme (ici, un profilé rectangulaire ouvert sur un côté). Les deux demi-ferrures 32 peuvent être disposées de part et d'autre du poteau 14. Les deux demi-ferrures 32 peuvent être identiques ou différentes l'une de l'autre.

L'attache 30, ou plus précisément chaque ferrure ou demi-ferrure 32, peut être réalisé par une feuille métallique découpée et pliée. Dans ce mode de réalisation, chaque demi-ferrure 32 comprend une partie centrale 34a et deux rabats de part et d'autre de la partie centrale 34a, à savoir un premier rabat 34b et un deuxième rabat 34c. Les bords 32a précités se trouvent à l'interface entre le premier rabat 34b d'une demi-ferrure 32 et le deuxième rabat 34c de l'autre demi-ferrure 32. Les rabats 34b, 34c sont ici formés à angle droit de la partie centrale 34a, mais toute autre forme peut être envisagée pour convenir à la forme du poteau 14.

Lorsque l'attache 30 est rapportée sur le poteau 14, elle peut être munie de moyens de fixation au poteau. A cet effet, au moins l'une des demi-ferrures 32 comprend un ou plusieurs orifices 36, par exemple, pour accueillir de tels moyens de fixation, par exemple des vis ou boulons. En l'espèce, la demi-ferrure 32 comprend une pluralité d'orifices 36 agencés selon une rangée, typiquement deux, trois orifices ou davantage.

Une pluralité de pieux d'ancrage 40 permet d'ancrer l'attache 30 dans le sol. En l'espèce, on a représenté quatre pieux d'ancrage 40, ici régulièrement répartis autour de l'attache 30, mais un nombre et/ou une répartition différente peuvent être envisagés. Les pieux d'ancrage 40 sont associés à l'attache 30 de façon à être inclinés par rapport au poteau 14, typiquement d'un angle d'au moins 15°, de préférence au moins 20°, de préférence encore au moins 30°, par exemple environ 35°.

Les moyens d'association des pieux 40 à l'attache 30 peuvent comprendre des manchons 38 de réception desdits pieux 40. Le cas échéant, les manchons 38 peuvent être formés dans la même feuille que la demi-ferrure 32, et donc être réalisés d'une seule pièce avec la demi-ferrure 32. Les manchons 38 peuvent être obtenus par roulage. En outre, comme il ressort de la figure 2, les moyens d'ancrage 20 peuvent comprendre des moyens de verrouillage des pieux d'ancrage 40 par rapport à l'attache 30, notamment par rapport aux manchons 38, en l'espèce des vis 38a qui traversent à la fois les manchons 38 et les pieux 40.

Chacun des pieux 40 peut être maintenu par un manchon 38, voire plusieurs manchons 38 pour contrôler son orientation de manière plus précise et répartir la transmission d'efforts entre l'attache 30 et le pieu 40. Par exemple, chaque pieu 40 peut être inséré dans deux manchons 38 disjoints. Selon une possibilité, les deux manchons 38 recevant un pieu 40 donné peuvent appartenir à la même demi-ferrure 32 : c'est le cas des manchons 381 sur la figure 2. Selon une autre possibilité, les deux manchons recevant un pieu 40 donné peuvent appartenir à des demi-ferrures 32 différentes : c'est le cas des manchons 382b, 382c sur la figure 2, dont un premier 382b appartient à une première demi-ferrure 32 tandis que le deuxième 382c appartient à une deuxième demi-ferrure 32. Le premier manchon 382b peut être formé sur le premier rabat 34b d'une demi-ferrure 32. Le deuxième manchon 382c peut être formé sur le deuxième rabat 34c de l'autre demi-ferrure 32. Dans ce cas de figure, le pieu d'ancrage 40 solidarise les deux demi-ferrures 32 entre elles.

Cette configuration peut être fiabilisée par le fait qu'un autre pieu 40 est reçu symétriquement dans un premier manchon 382b de ladite autre demi-ferrure 32 et dans un deuxième manchon 382c de ladite une demi-ferrure 32 (cachée sur la figure 2).

Ainsi, plus généralement, les deux demi-ferrures 32 peuvent être assemblées l'une à l'autre par un ou plusieurs des pieux d'ancrage 40.

Comme il ressort de la figure 3, non seulement les pieux d'ancrage 40 mais aussi le poteau de support 14 sont à enfoncer dans le sol 16. Ainsi, le poteau de support 14 s'étend au-delà de l'attache 30, à l'opposé des panneaux solaires qu'il soutient. Par exemple, le poteau de support 14 s'étend au-delà de l'attache sur au moins 50 cm, voire au moins 1 m, voire encore au moins 1,5 m ou 2 m. Plus il est possible d'enfoncer le poteau de support 14, plus il est possible d'alléger les moyens d'ancrage 20 qui transmettent au poteau 14 le rôle de résistance aux efforts latéraux, causés par exemple par le souffle du vent sur les panneaux solaires. Les pieux d'ancrage 40 conservent toutefois un rôle de résistance à l'arrachement.

Comme l'illustre la figure 3, le poteau 14 peut s'étendre, à l'opposé du panneau solaire, au-delà des pieux d'ancrage 40. Toutefois, la configuration opposée est également envisagée, auquel cas les pieux d'ancrage 40 s'étendent au-delà du poteau 14. En outre, bien que les pieux d'ancrage 40 aient ici été représentés de même longueur, des longueurs différentes peuvent être prévues d'un pieu 40 à l'autre, par exemple en fonction de la faculté d'enfoncement dans le sol 16.

Pour faciliter son enfoncement dans le sol 16, notamment mais pas uniquement lorsque son extrémité inférieure (c'est-à-dire l'extrémité opposée au panneau solaire) est pleine, l'extrémité inférieure du poteau 14 peut être effilée. Par exemple, cette extrémité peut être en forme de pointe ou de biseau pour mieux chasser la matière du sol 16 lors de l'enfoncement.

La structure de support 10 peut être installée en enfonçant le ou les poteaux de support 14 dans le sol et en enfonçant les pieux d'ancrage 40, associés à l'attache 30, dans le sol. L'enfoncement du poteau 14 peut se faire avant, simultanément à ou après l'enfoncement des pieux 40. Pour l'enfoncement, tout outil approprié peut être utilisé, par exemple un marteau hydraulique ou pneumatique ou un autre moyen de frappe.

Selon un exemple de mise en œuvre, le poteau 14 est enfoncé dans le sol 16, jusqu'à la profondeur souhaitée ou moins, mais suffisamment pour conserver une orientation stable. Ensuite, les demi-ferrures 32 sont disposées autour du poteau 14 et assemblées l'une à l'autre par les pieux 40, qui sont à leur tour enfoncés dans le sol. Si nécessaire, l'enfoncement du poteau 14 dans le sol est ensuite complété. Une fois que le poteau 14 et les pieux 40 ont été enfoncés à la profondeur souhaités, de manière optionnelle, le surplus de longueur éventuel du poteau 14 et/ou des pieux 40 peut être découpé, par exemple tronçonné. Les pieux 40 sont verrouillés par rapport à l'attache 30, typiquement via les vis 38a.

Pour la fixation de l'attache 30 au poteau de support 14, un perçage de l'attache 30 et/ou du poteau de support 14 peut être réalisé in situ. Dans le présent exemple, l'attache comprenant déjà les orifices 36, c'est le poteau 14 qui est percé uniquement à l'endroit souhaité, en regard d'un orifice 36 par exemple, pour accueillir des moyens de fixation. Alternativement, le poteau 14 pourrait être pré-percé, auquel cas l'installateur peut utiliser les perçages du poteau 14 qui apparaissent en vis-à-vis des orifices 36 pour engager les moyens de fixation. Alternativement encore, le poteau 14 peut être pré-percé et l'attache 30 peut ne pas l'être, auquel cas c'est l'attache 30 qui est percée pour permettre le passage des moyens de fixation.

Bien que la présente description se réfère à des exemples de réalisation spécifiques, des modifications peuvent être apportées à ces exemples sans sortir de la portée générale de l'invention. Par exemple, bien qu'elle ait été illustrée comme une pièce rapportée sur le poteau de support 14, l'attache 30 peut être une partie du poteau de support 14, en particulier monolithique avec le poteau de support 14 ; dans ce cas, l'attache 30 peut être prévue à une distance non nulle de l'extrémité inférieure du poteau, supérieure ou égale à la profondeur d'enfoncement souhaitée. Plus généralement, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Structure de support (10) d'au moins un panneau solaire (12), comprenant au moins un poteau de support (14) muni de moyens d'ancrage (20) dans le sol, les moyens d'ancrage (20) comprenant une attache (30) associée à des pieux d'ancrage (40) à enfoncer dans le sol (16), **caractérisé en ce que** le poteau de support (14) s'étend au-delà de l'attache (30), à l'opposé de l'au moins un panneau solaire (12), pour son enfoncement dans le sol (16).

2. Structure de support selon la revendication 1, dans laquelle l'attache (30) comprend une ferrure rapportée sur le poteau de support (14).

3. Structure de support selon la revendication 1 ou 2, dans laquelle l'attache (30) comprend deux demi-ferrures (32).

4. Structure de support selon la revendication 3, dans laquelle les deux demi-ferrures (32) sont assemblées l'une à l'autre par un ou plusieurs des pieux d'ancrage (40).

5. Structure de support selon l'une quelconque des revendications 1 à 4, dans laquelle le poteau de support (14) s'étend au-delà de l'attache, à l'opposé de l'au moins un panneau solaire (12), sur au moins 50 cm, de préférence au moins 1 m.

6. Structure de support selon l'une quelconque des revendications 1 à 5, dans laquelle le poteau de support (14) est creux et/ou le poteau de support (14) est formé par un profilé.

7. Structure de support selon l'une quelconque des revendications 1 à 6, dans laquelle les pieux d'ancrage (40) sont inclinés par rapport au poteau de support (14), l'angle entre un pieu d'ancrage (40) et le poteau de support (14) mesurant de préférence au moins 15°, de préférence au moins 20°, de préférence encore au moins 30°.

8. Structure de support selon l'une quelconque des revendications 1 à 7, dans laquelle les moyens d'ancrage (20) comprennent des moyens de verrouillage (38a) des pieux d'ancrage (40) par rapport à l'attache (30).

9. Structure de support selon l'une quelconque des revendications 1 à 8, dans laquelle l'extrémité du poteau de support (14) opposée au panneau solaire (12) est effilée.

10. Procédé de montage d'une structure de support (10) d'au moins un panneau solaire (12), la structure de support étant selon la revendication 1, le procédé comprenant l'enfoncement dans le sol d'au moins un poteau de support (14) de la structure de support (10), la fourniture de moyens d'ancrage (20) dudit poteau de support (14), les moyens d'ancrage (20) comprenant une attache (30) associée à des pieux d'ancrage (40), et l'enfoncement dans le sol desdits pieux d'ancrage (40).

11. Procédé de montage selon la revendication 10, comprenant le perçage de l'attache (30) et/ou du poteau de support (14) pour accueillir des moyens de fixation de l'attache (30) au poteau de support (14).

## Patentansprüche

1. Trägerstruktur (10) mindestens eines Solarpanels (12), umfassend mindestens einen Stützpfosten (14), der mit Mitteln (20) zum Verankern im Boden ausgestattet ist, wobei die Verankerungsmittel (20) ein Verbindungsstück (30) umfassen, das Verankerungspfählen (40), die in den Boden (16) einzutreiben sind, zugeordnet ist,
**dadurch gekennzeichnet, dass** sich der Stützpfosten (14) über das Verbindungsstück (30), mindestens einem Solarpanel (12) gegenüberliegend, hinaus erstreckt, um in den Boden (16) eingetrieben zu werden.

2. Trägerstruktur nach Anspruch 1, wobei das Verbindungsstück (30) einen Beschlag umfasst, der an dem Stützpfosten (14) angesetzt ist.

3. Trägerstruktur nach Anspruch 1 oder 2, wobei das Verbindungsstück (30) zwei Halbbeschläge (32) umfasst.

4. Trägerstruktur nach Anspruch 3, wobei die beiden Halbbeschläge (32) durch einen oder mehrere der Verankerungspfähle (40) miteinander zusammengebaut sind.

5. Trägerstruktur nach einem der Ansprüche 1 bis 4, wobei sich der Stützpfosten (14) über das Verbindungsstück, mindestens einem Solarpanel (12) gegenüberliegend, über mindestens 50 cm, bevorzugt mindestens 1 m, hinaus erstreckt.

6. Trägerstruktur nach einem der Ansprüche 1 bis 5, wobei der Stützpfosten (14) hohl ist und/oder der Stützpfosten (14) durch ein Profil gebildet ist.

7. Trägerstruktur nach einem der Ansprüche 1 bis 6, wobei die Verankerungspfähle (40) im Verhältnis zu dem Stützpfosten (14) geneigt sind, wobei der Winkel zwischen einem Verankerungspfahl (40) und dem Stützpfosten (14) bevorzugt mindestens 15°, bevorzugt mindestens 20°, weiter bevorzugt mindestens 30° beträgt.

8. Trägerstruktur nach einem der Ansprüche 1 bis 7, wobei die Verankerungsmittel (20) Mittel (38a) zum Verriegeln der Verankerungspfähle (40) im Verhältnis zu dem Verbindungsstück (30) umfassen.

9. Trägerstruktur nach einem der Ansprüche 1 bis 8, wobei das Ende des Stützpfostens (14) dem Solarpanel (12) gegenüberliegend spitz zulaufend ist.

10. Montageverfahren einer Trägerstruktur (10) mindestens eines Solarpanels (12), wobei die Trägerstruktur nach Anspruch 1 gestaltet ist, wobei das Verfahren das Eintreiben in den Boden mindestens eines Stützpfostens (14) der Trägerstruktur (10), das Bereitstellen von Verankerungsmittels (20) des Stützpfostens (14), wobei die Verankerungsmittel (20) ein Verbindungsstück (30) umfassen, das den Verankerungspfählen (40) zugeordnet ist, und das Eintreiben in den Boden der Verankerungspfähle (40) umfasst.

11. Montageverfahren nach Anspruch 10, umfassend das Bohren des Verbindungsstücks (30) und/oder des Stützpfostens (14), um Mittel zum Befestigen des Verbindungsstücks (30) an dem Stützpfosten (14) aufzunehmen.

## Claims

1. A support structure (10) for at least one solar panel (12), comprising at least one support post (14) provided with means for anchoring (20) in the soil, the anchoring means (20) comprising a fastener (30) associated with anchor piles (40) to be driven into the soil (16), **characterized in that** the support post (14) extends beyond the fastener (30), opposite to the at least one solar panel (12), in order to be driven into the soil (16).

2. The support structure according to claim 1, wherein the fastener (30) comprises a fitting added onto the support post (14).

3. The support structure according to claim 1 or 2, wherein the fastener (30) comprises two half-fittings (32).

4. The support structure according to claim 3, wherein the two half-fittings (32) are assembled to each other by one or more of the anchor piles (40).

5. The support structure according to any one of claims 1 to 4, wherein the support post (14) extends beyond the fastener, opposite to the at least one solar panel (12), by at least 50 cm, preferably at least 1 m.

6. The support structure according to any one of claims 1 to 5, wherein the support post (14) is hollow and/or the support post (14) is formed by a section.

7. The support structure according to any one of claims 1 to 6, wherein the anchor piles (40) are inclined relative to the support post (14), the angle between an anchor pile (40) and the support post (14) preferably measuring at least 15°, preferably at least 20°, more preferably at least 30°.

8. The support structure according to any one of claims 1 to 7, wherein the anchoring means (20) comprise means for locking (38a) the anchor piles (40) relative to the fastener (30).

9. The support structure according to any one of claims 1 to 8, wherein the end of the support post (14) opposite to the solar panel (12) is tapered.

10. A method for mounting a support structure (10) for at least one solar panel (12), the support structure being according to claim 1, the method comprising driving at least one support post (14) of the support structure (10) into the soil, providing means for anchoring (20) said support post (14), the anchoring means (20) comprising a fastener (30) associated with anchor piles (40), and driving said anchor piles (40) into the soil.

11. The mounting method according to claim 10, comprising drilling the fastener (30) and/or the support post (14) to accommodate means for fixing the fastener (30) to the support post (14).
